# EUROPEAN PATENT SPECIFICATION

(11) **EP 1 369 720 B1**
(45) Date of publication and mention of the grant of the patent: **19.09.2007**
(21) Application number: 02701647.6
(22) Date of filing: 28.02.2002
(51) Int. Cl.: G02B 6/38

(54) **FERRULE FOR OPTICAL CONNECTOR AND METHOD OF MANUFACTURING THE FERRULE**
HÜLSE FÜR OPTISCHEN VERBINDER UND VERFAHREN ZUR HERSTELLUNG DER HÜLSE
FERRULE POUR CONNECTEUR OPTIQUE ET PROCEDE DE FABRICATION DE LA FERRULE

(30) Priority: 28.02.2001 JP 2001055578; 30.03.2001 JP 2001101150
(43) Date of publication of application: 10.12.2003
(73) Proprietor: Sumitomo Electric Industries, Ltd., Osaka-shi, Osaka 541-0041 (JP)
(72) Inventor: OHTSUKA, Kenichiro, Yokohama-shi, Kanagawa 244-8588 (JP); TAMEKUNI, Yoshikyo, Yokohama-shi, Kanagawa 244-8588 (JP); KATSURA, Hiroshi, Yokohama-shi, Kanagawa 244-8588 (JP); UEDA, Tomohiko, Yokohama-shi, Kanagawa 244-8588 (JP); KAKII, Toshiaki, Yokohama-shi, Kanagawa 244-8588 (JP)
(74) Representative: HOFFMANN EITLE
(86) International application number: PCT/JP2002/001871
(87) International publication number: WO 2002/069011

(56) References cited:
- EP-A- 1 039 323
- EP-A2- 0 052 014
- EP-A2- 0 241 724
- WO-A-99/54770
- DE-U1- 29 721 776
- JP-A- 6 278 157
- JP-A- 8 278 426
- JP-A- 9 015 453
- JP-A- 10 048 468
- JP-A- 10 186 175
- JP-A- 2001 004 862
- US-A- 6 012 969
- PATENT ABSTRACTS OF JAPAN vol. 2000, no. 03, 30 March 2000 (2000-03-30) & JP 11 352358 A (SUMITOMO ELECTRIC IND LTD), 24 December 1999 (1999-12-24)
- PATENT ABSTRACTS OF JAPAN vol. 1998, no. 12, 31 October 1998 (1998-10-31) & JP 10 186175 A (SUMITOMO ELECTRIC IND LTD), 14 July 1998 (1998-07-14)
- PATENT ABSTRACTS OF JAPAN vol. 1997, no. 02, 28 February 1997 (1997-02-28) & JP 08 278426 A (FUJIKURA LTD), 22 October 1996 (1996-10-22)
- PATENT ABSTRACTS OF JAPAN vol. 2000, no. 16, 8 May 2001 (2001-05-08) & JP 2001 004862 A (SUMITOMO ELECTRIC IND LTD), 12 January 2001 (2001-01-12)

## Description

### Technical Field

The present invention relates to a ferrule for an optical connector which is one of components of an optical connector and which positions and secures an end face of an optical fiber, and a method of making thereof.

### Background Art

One of the methods of connecting ends of optical fibers to each other is a method of providing a connector structure at the ends of optical fibers. For constructing the connector structure at the ends of optical fibers, components called ferrules are used as members for positioning and securing the ends of optical fibers, facilitating the positioning of the ends to each other, and maintaining the fibers in a connected state. For example, MT connectors and MPO connectors are commonly known as connector standards using the ferrules. An example of such known connectors is one described in the Publication of JP 9-68627A.

Upon connection of optical fibers their cores in the central portions thereof need to be positioned with accuracy, and in these MT connectors and MPO connectors guide holes and guide pins are used for positioning the cores to each other. A pair of guide holes are bored in a connecting end face of each connector and guide pins are inserted into these guide holes to position a pair of optical connectors. There were, however, cases wherein upon coupling/uncoupling of the connectors the guide pins damaged the periphery of the opening portions of the guide holes to degrade the connection state, thereby increasing transmission loss. The ferrule for an optical connector described in the aforementioned publication is constructed in order to solve this problem so that a taper portion is provided around the opening portion of each guide hole.

EP-A-1 039 323 and JP-A-11-352358 disclose a ferrule according to the preamble of claim 1. WO-A-9954770 and DE-U1-297 21 776 disclose to provide countersunk or tapered entrances to holes in optical fibre connectors to facilitate easy insertion of alignment pins. JP-A-10186175 discloses ferrules constituted by a resin composition containing 75 to 90 wt.% spherical silica particles having a size of max. 100 µm and a size distribution of 10 to 20 µm. US-A-6 012 969 discloses an abrasive member for very high return loss optical connector ferrules, which abrasive member comprises a flexible substrate and an abrasive layer on the surface of the flexible substrate. The surface roughness of the abrasive layer is in the range of 0.05 µm to 0.05 µm. JP-A-8278426 discloses drilling an entrance hole in a ferrule. JP-A-2001004862 discloses a ferrule having a ferrule body which includes a connection end, and fibre-positioning holes into which optical fibres are inserted, are formed penetrating through the ferrule body from the connection end. Near the connection end, each of the fibre-positioning holes has a region in which the internal diameter expands toward the connection end.

### Disclosure of the Invention

The ferrule for optical connector provided with such taper portions can suppress the increase of transmission loss described above. The inventors invented a ferrule for an optical connector that can realize far superior performance. An object of the present invention is to provide a ferrule for an optical connector that is configured to effect the positioning with guide pins and guide holes and that can further reduce the connection loss upon connection of connectors and making-method thereof.

For achieving above mentioned object, a ferrule for an optical connector according to the present invention has the features which are indicated in claim 1. Preferred embodiments of the invention are indicated in dependent claims 2 to 9.

The provision of the chamfer portions can facilitate the insertion of the guide pins, prevent the damage of the connecting end face caused by the guide pins, and suppress the increase of connection loss due to the damage. The provision of the chamfer portions can suppress deformation of the rear ends of guides due to the guide pins and, in turn, degradation of the connection state between connecting end faces and thus can also restrain the increase of connection loss in this respect. In the present invention, further, the connecting end face is formed so as to have an angle relative to the plane normal to the center axes of the pair of guide holes, which can decrease degradation of characteristics due to reflection at the end face of optical fiber.

A method of making a ferrule in accordance with the invention is indicated in claim 10. Preferred embodiments of the method are indicated in dependent claims 11 to 17. Making chamfer portions by drilling or grinding process after molding ferrule body by plastic molding in such a way, that allows making a chamfer portion having a desired shape accurately. For example, the drilling or grinding process specified in claim 10 is performed by a drilling process with drill whose tip is made of hard metal or a diamond or grinding process with rotating grindstone.

A drilling or grinding process with drill or grindstone can ease to change the shape of the chamfer portion by changing the shape of drill tip or grindstone, general versatility of processing is increased and it can increased the manufacturing accuracy of chamfer portion. Further, if the connecting end face is angled and it is necessary for making the chamfer portion corresponding to the angle of the connecting end face, the chamfer portion may be made at preferred position. So the freedom of making the chamfer portion is highly increased by using the drilling or grinding process for forming the chamfer portions as such.

It is preferable here that a center axis of each chamfer portion be spaced from and parallel to the center axis of each corresponding guide hole, and positioned in an area extending from the plane passing through both center axes of the pair of guide holes toward the side where the base end side of the connecting end face exists. The expression " the area extending from the plane passing through both center axes of the pair of guide holes toward the side where the base end side of the connecting end face exists" as used herein shall mean the overall area extending away from such plane toward the side where the base end side of the connecting end face exists. Further, since the connecting end face is formed to make an angle with the center axis of the guide hole have a tip end side and a base end side, the expression "the side where the base end side of the connecting end face exists" indicates the side on which this base end side exists.

By adopting such structure, the chamfer portions are formed at preferred positions in the inclined connecting end face, whereby the areas around the chamfer portions can be prevented from chipping and whereby the distal ends of the guide pins can be guided into the guide holes with accuracy. As a consequence, the effects of the provision of the chamfer portions can be achieved with more certainty than in the case of the chamfer portions being simply formed, and the connection loss can be reduced more.

Further, it is preferable here that when the connecting end face is formed so as to have an angle of 8° relative to the plane normal to the center axes of the two guide holes, the chamfer portions be formed so that an aperture size of each chamfer portion on the connecting end face is within a range of 1.05 to 2.0 times an inside diameter of the guide holes. When the aperture size of each chamfer portion is set within such range, the effects of the provision of the chamfer portions can be achieved best. The setting in this range can accurately absorb fluctuations of the guide pins upon connection of connectors due to the tolerance of the ferrule itself and/or the tolerance of a housing if the ferrule is housed in the housing.

In another configuration, it is preferable that when the connecting end face is formed with such angle, a deviation amount between the center axis of each chamfer portion and the center axis of each guide hole be 50-300 µm. When the deviation amount is set in such range, the chamfer portions on the connecting end face can be set at preferable positions, which can maximize the effects of the provision of the chamfer portions.

It is also preferable that each chamfer portion be formed so that the center axis of each chamfer portion has an angle relative to the center axis of each corresponding guide hole. It is more preferable that its relative angle is set to be not more than the angle of the connecting end face relative to the plane normal to the center axes of the guide holes. Off course, these angles may set to be equal.

By adopting such structures, the guide pins can be smoothly guided into the guide holes by the chamfer portions and the chamfer portions can be made readily. In case of equalizing these angles, it becomes feasible to enhance the positional accuracy of the chamfer portions and the like and facilitate the formation of the chamfer portions.

Preferably, the ferrule may include the filler whose average particle size is 20 µm or less. More preferably, maximum particle size of the filler 40 µm or less. Such filler may be silica. Including such filler can realize the smooth surface of the chamfer portion, so when the guide pin contacts the chamfer portion, the deformation of guide pin or chamfer potion can be restrained and excessive abrasion of drilling or grinding tools can be restrained. More preferably, the surface roughness of this chamfer portion is within the range between 0.01 to 2.0µm.

### Brief Description of the Drawings

Figs. 1A and 1B are perspective views showing the appearance of the optical connectors using the ferrules for optical connectors according to the first embodiment of the present invention, wherein Fig. 1A shows a state before connection and Fig. 1B shows a state of connection;
Fig. 2 is a plan view of the ferrule in the optical connector without guide pins shown in Figs. 1A and 1B, Fig. 3 is a front view on the connecting end face thereof, and Fig. 4 is a cross-sectional view along line IV-IV of Fig. 2 with a tip of drill;
Figs. 5A and 5B show the relationship between guide holes and chamfer portions, wherein Fig. 5A is a view of a connecting end face from a direction of the center axis of a guide hole, and Fig. 5B is a cross-sectional view of the ferrule cut by a plane passing both the center axis of a guide hole and the center axis of a chamfer portion;
Fig. 6 is a cross-sectional view along line VI-VI of Fig. 2;
Fig. 7 is a plan view of the ferrule in the optical connector with guide pins shown in Fig. 1, and Fig. 8 is a cross-sectional view along line VIII-VIII thereof;
Figs. 9A and 9B are views equivalent to Figs. 5 of a second embodiment of the ferrule for optical connector according to the present invention; and

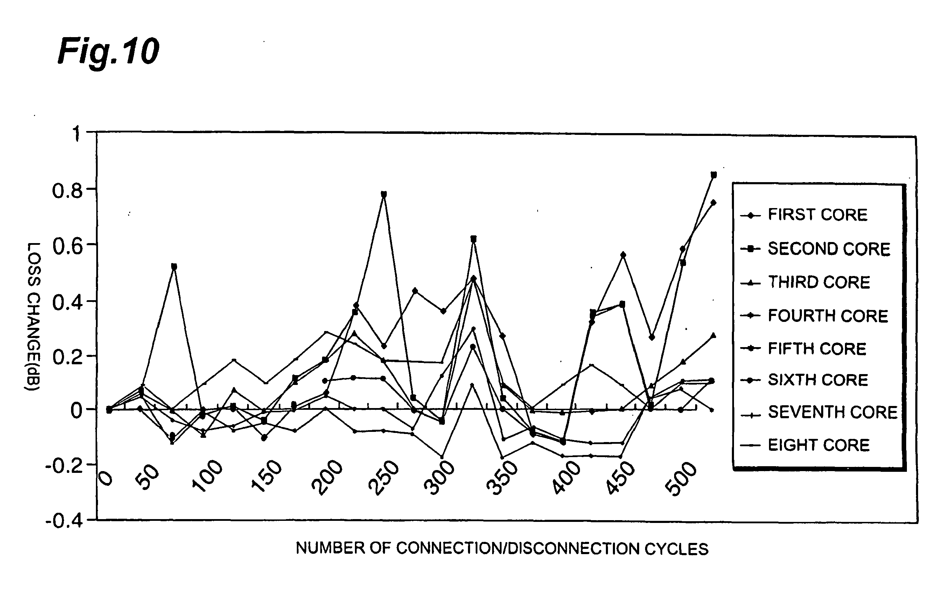

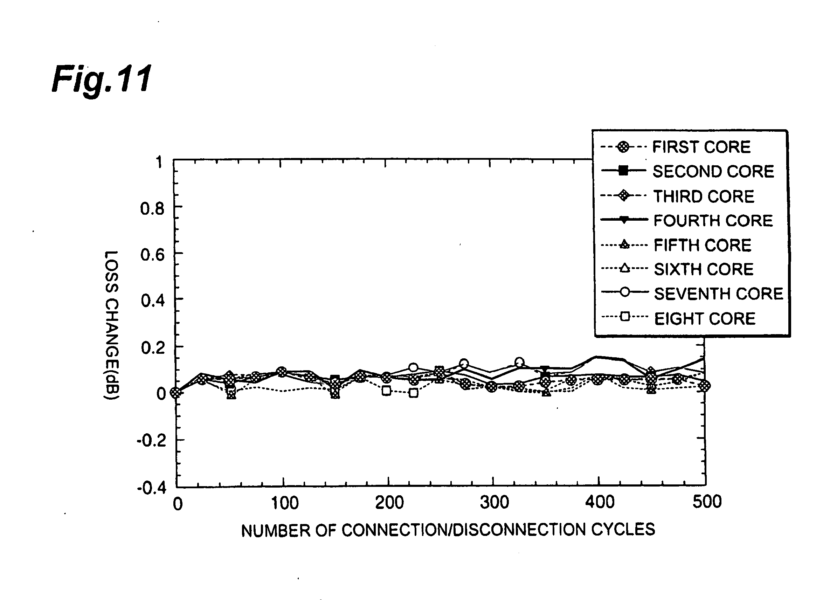

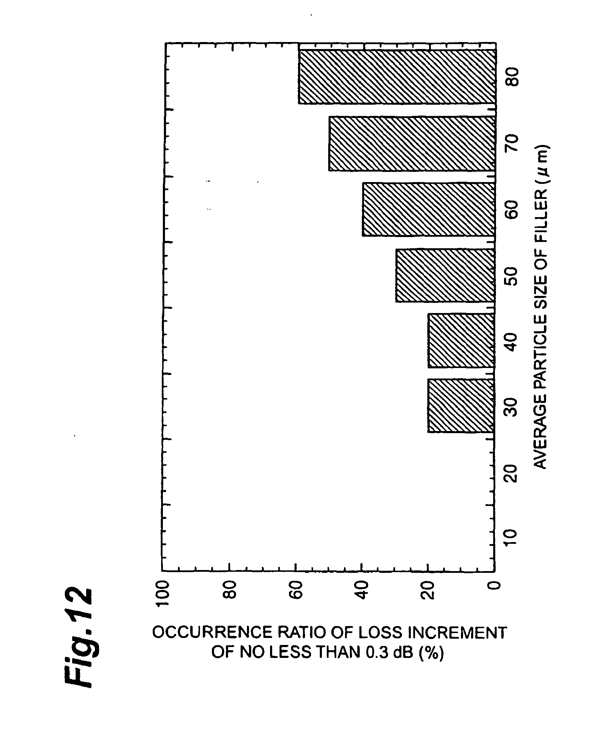

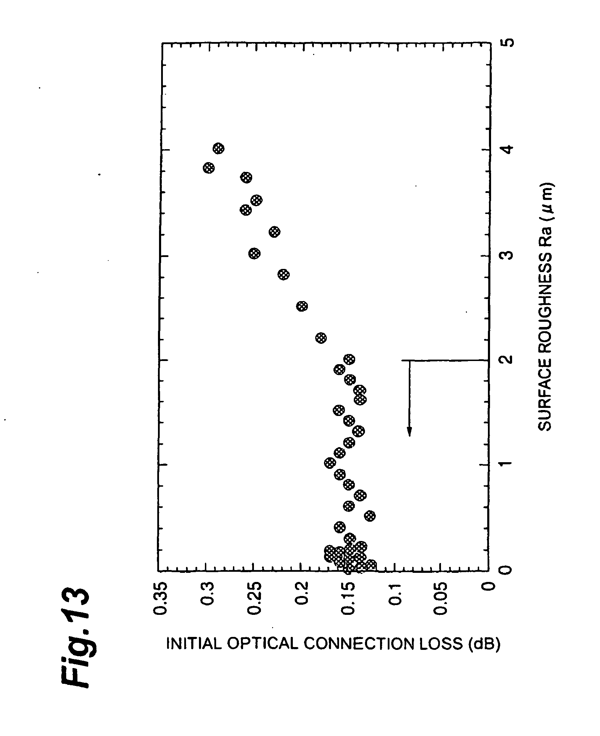

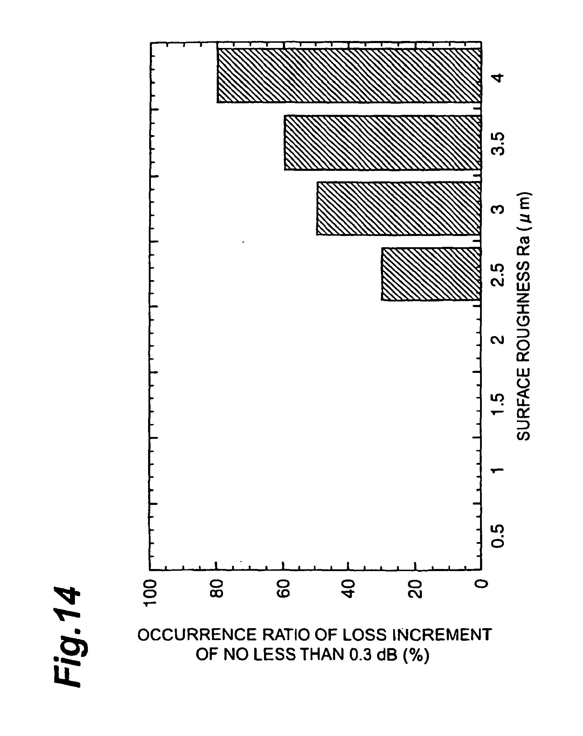

Figs. 10 to 14 represent experimental data illustrating the optical connection loss in optical connectors, wherein Fig. 10 represents experimental data obtained by using a connector ferrule in which no chamfer was provided at the opening edge portion of guide holes, Fig. 11 represents experimental data obtained by using the connector ferrule in accordance with the present invention, Fig. 12 represents experimental data obtained by changing the particle size of the filler contained in the connector ferrule, and Figs. 13 and 14 represent experimental data obtained when the surface roughness of the chamfer was changed.

### Best Modes for Carrying Out the Invention

The preferred embodiments of the present invention will be described with reference to the attached drawings. To facilitate the comprehension of the explanation, the same reference numerals denote the same parts, where possible, throughout the drawings, and a repeated explanation will be omitted.

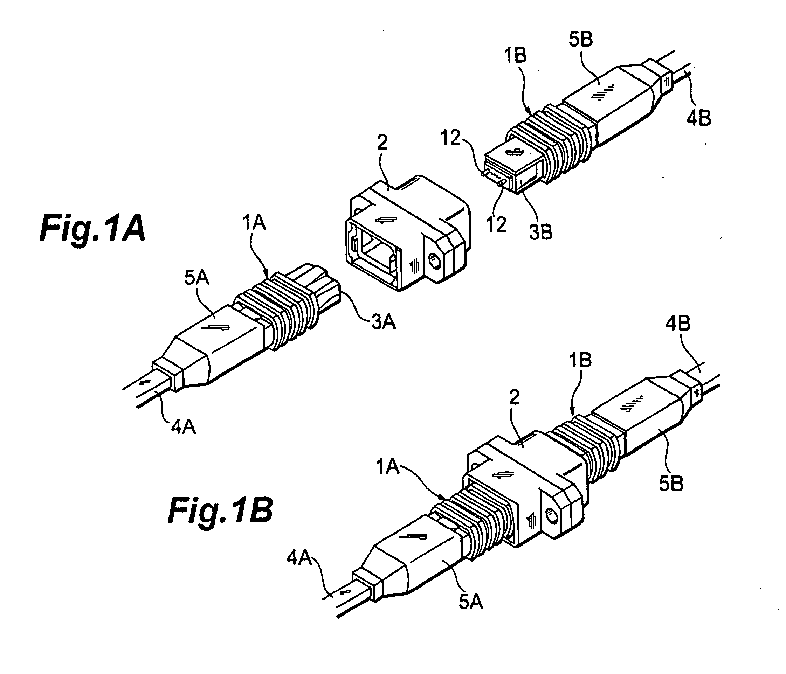

Figs. 1A and 1B are perspective views showing the appearance of the optical connectors using the ferrules for optical connectors according to the first embodiment of the present invention. Fig. 1A is a view showing a state before connection between the optical connectors and Fig. 1B is a view showing a state of connection between the optical connectors.

In these figures, the optical connectors 1A, 1B are MPO connectors, in which the optical connector 1A is constructed as a connector without guide pins and the optical connector 1B as a connector with guide pins 12. These optical connectors 1A, 1B are detachably connected through an adapter 2.

The optical connector 1A has a ferrule 3A and a single coated optical fiber or a optical fiber ribbon 4A (eight fibers, herein) is assembled in this ferrule 3A. The optical connector 1B has a ferrule 3B and a fiber ribbon 4B having the same number of fibers as the fiber ribbon 4A is assembled in this ferrule 3B. These ferrules 3A, 3B are held in their respective housings 5A, 5B.

For enhancing strength and endurance, these ferrules 3A, 3B are made of plastic, e.g. PPS (Poly-Phenylene Sulfide) including silica filler. Mixing ratio (weight ratio) of these material is 30% PPS and 70% filler, for example.

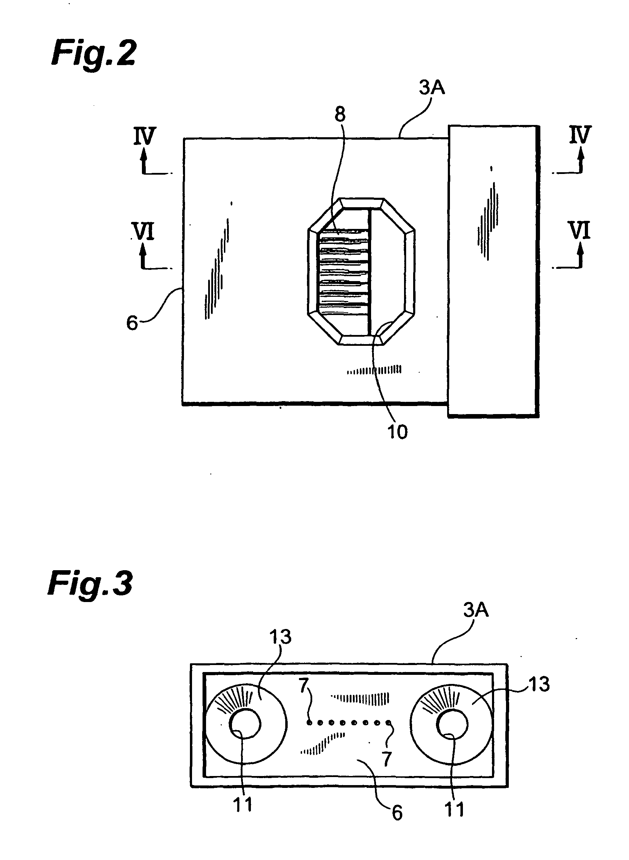

A specific configuration of the ferrule 3A is shown in Fig. 2 to Fig. 6. In these figures, the ferrule 3A has eight fiber positioning holes 7 extending inwardly from a connecting end face (front end face) 6, which is to be joined to the partner connector 1B. A fiber ribbon receiving bore 9 communicates through fiber guide grooves 8 with the fiber positioning holes 7. When the fiber ribbon 4A is installed into this ferrule 3A, the fiber ribbon 4A is inserted into the ribbon receiving bore 9 from the rear end side of the ferrule 3A and eight optical fibers exposed from the tip of the fiber ribbon 4A are inserted into the corresponding fiber positioning holes 7.

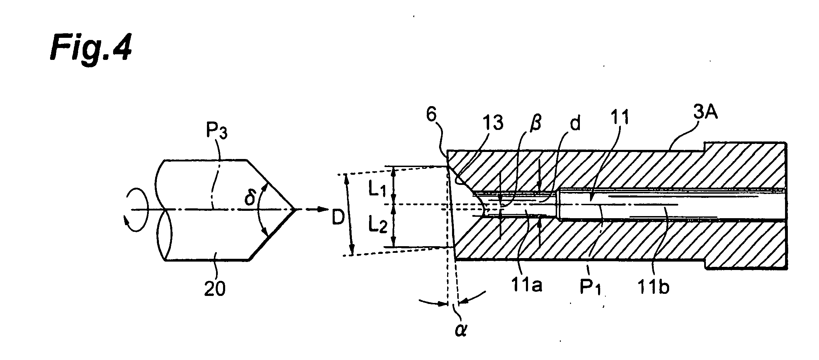

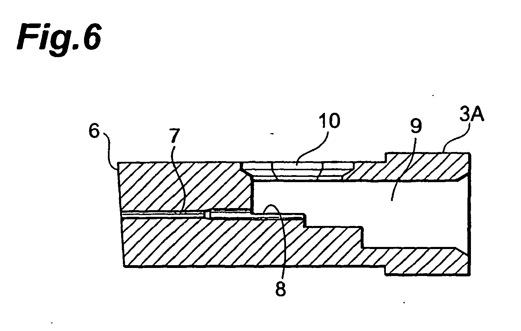

Then an adhesive is charged through an opening portion 10 formed in the top surface of the ferrule 3A to secure the optical fibers to the ferrule 3A. After the fiber ribbon 4A is installed in the ferrule 3A in this way, the front end face 6 of the ferrule 3A is polished so as to have an angle of 8° (angle α in Fig. 4) relative to a plane perpendicular to the center axes of the fiber positioning holes 7 (where, optical fibers are not shown in Figs. 4 and 6). If the distal ends of the optical fibers are also polished similarly at the angle of 8° on the occasion of this polishing, influence of optical feedback due to Fresnel reflection and the like can be reduced in a connected state of the connectors.

In another method, the connecting end face 6 is formed at the foregoing angle of 8° in advance and the optical fibers are fixed in a projecting state from the ends of the fiber positioning holes 7. Then the distal end faces of the optical fibers are polished so as to make right angles to the center axes of the fiber positioning holes 7 in certain cases. If the distal ends of the optical fibers are made to project a little from the connecting end face 6 after the polishing, so-called PC (Physical Contact) connection can be implemented with reduction in connection loss. During the polishing, part of the connecting end face may be polished so as to make right angles to the center axes of the fiber positioning holes 7.

On the both sides of the fiber positioning holes 7, a pair of guide holes 11 are formed from the front end face 6 of the ferrule 3A toward the interior. The pair of guide holes 11 are parallel to each other and also parallel to the fiber positioning holes 7. Guide pins 12 provided in the optical connector 1B are inserted into the respective guide holes 11.

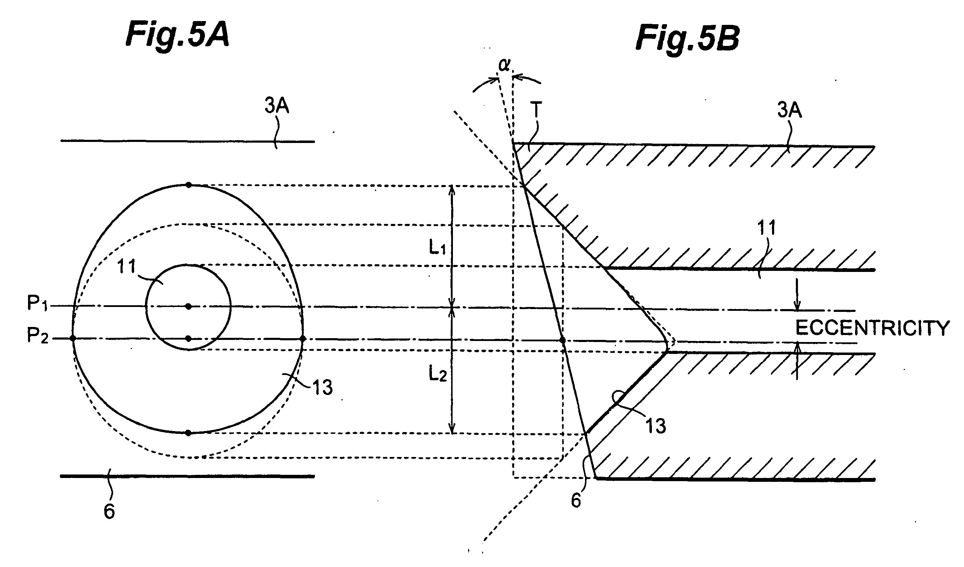

A chamfer portion 13 is formed at an opening edge of each guide hole 11 on the front end face 6 side, so that the opening portion of each guide hole 11 is widened toward the front end face 6 by the chamfer portion 13. The axis of rotational symmetry of the chamber portion 13 is excentric in respect of the center axis of its corresponding guide hole 11. In the present embodiment the chamfer portions 13 have the form equivalent to a part of a surface of a cone which is a body of revolution. And, as shown in Fig. 5A and 5B, the center axis P₁ of each guide hole 11 and the center axis P₂ of the corresponding chamfer portion 13 are parallel to each other, and the center axis P₂ of the chamfer portion 13 is positioned in the area extending from the plane passing through both center axes P₁ of the guide holes 11 toward the side where the base end side of the connecting end face 6 exists. Each chamfer portion 13 has the form equivalent to a part of a surface of a body of revolution as described above, and the center axis P₂ of the chamfer portion 13 represents the rotation axis of this body of revolution.

As described above, the expression "the area extending from the plane passing through both center axes P₁ of the pair of guide holes 11 toward the side where the base end side of the connecting end face 6 exists" as used herein shall mean the overall area including "the area occupied by such plane itself" and "the area that extends away from such plane to the side where the base end side of the connecting end face 6 exists". The expression "the base end side of the connecting end face 6" indicates, when the side of the front end face 6 on which the tip end T formed to make an angle with the center axis P₁ of the guide hole 11 is called the tip end side, the side opposite to the tip end side. In Fig. 5, the lower side of the drawing is such "side in which the base end side exists" and the upper side thereof is the "side in which the tip end side exists". Particularly in this embodiment, the center axis P₂ of the chamfer portion 13 is positioned in "the area extending away from the plane" passing through both center axes P₁ of the guide holes 11 "toward the side where the base end side of the connecting end face 6.

Accordingly, by positioning the center axis P₂ of the chamfer portion 13 in the area extending from the plane defined by the center axes P₁ of the pair of guide holes 11 toward the side where the base end side of the connecting end face 6 exists, the chamfer portions 13 can be formed on the connecting end face 6 without lying off the connecting end face 6. Namely, distances L₁ and L₂ in Fig. 4 can be made approximately equal to each other, or the difference thereof can be reduced. Contrarily, if the center axis P₂ of the chamfer portion 13 is positioned in the area of the side in which the base end side of the connecting end face 6 exists more than the plane passing through both center axes P₁ of the pair of guide holes 11, L₁ would be larger than L₂ and the chamfer portion 13 could lie off the connecting end face 6 on the L₁ side.

For making above described cone formed chamfer portion 13 on plastic ferrule 3A, the hard metal or diamond drill tip 20 is used as shown in Fig. 4. The center axis P3 of the drill tip 20 is staggered relative to the center axis P1 of the guide pin hole 11 so as to arrange the center axis P3 of the drill tip 20 and the center axis P2 of the chamfer portion 13 in a straight line (as shown in Figs. 5A and 5B). To be more specific, with keeping the state of parallel arrangement of the center axis P3 of the drill tip 20 and the center axis P1 of the guide pin hole 11 the center position of drill tip 20 is shifted given amount from the center of guide pin hole 11.

The reason for using drill tip 20 for making such chamfer portion 13 is that it is easy to change the shape of the chamfer portion 13 by only changing the shape of drill tip 20 so that the general versatility is highly increased. Further, as compared with the injection molding, the manufacturing accuracy of the chamfer portion 13 can be increased and the freedom of changing the position of the chamfer portion 13 can be increased. When the connecting end face 6 of the ferrule tilts and its tilt angle is α, it is necessary to form the chamfer portion 13 corresponding to this tilt angle α. By using drill tip 20 for processing this chamfer portion 13, the chamfer portion corresponding to various tilt angle α can be realized easily and certainly. It contributes to enhance productivity of ferrule 3A having tilted connecting end face 6.

It is not essential for forming the cone-shape chamfer portion 13 to parallel arrange the center axis P3 of the drill tip 20 and the center axis P1 of the guide pin hole 11 while shifting the center axis P3 of the drill tip 20 against the center axis P1 of the guide pin hole 11. However, with keeping parallel arrangement of the center axis P3 of the drill tip 20 and the center axis P1 of the guide pin hole 11, the position of the drill tip 20 is controlled by the translation operation of the drill tip 20 relative to the center axis P1 of the guide pin hole 11. So it is possible to process the chamfer potion 13 rapidly and accurately by only determining the shifted amount of P3 from P1.

Further, the point angle δ of the drill tip 20 is corresponding to the expanding angle of chamfer portion 13 which will be processed and it is experimentally demonstrated that the stability of drilling process with drill tip 20 is enhanced when the point angle δ is within the range between 90 to 150 degrees. In the case of adopting hard metal for drill tip 20, the endurance of the drill tip 20 is enhanced for keeping an acceptable processing accuracy of the surface of the chamfer portion 13. Further, when the drill tip 20 is made of diamond, the endurance of the drill tip 20 is more enhanced.

Figs. 5A and 5B show the region around the guide hole 11 and chamfer portion 13. Fig. 5A is a view of the connecting end face 6 from the direction of the center axis P₂ of the guide hole 11 and the chamfer portion 13, and Fig. 5B a cross-sectional view of the ferrule cut by the plane passing the both center axes P₁, P₂ of the guide hole 11 and the chamfer portion 13. In these figures, L₁ = L₂ and the foregoing angle α is illustrated with some emphasis for easier understanding. In the figures P₁ represents the center axis of the guide hole 11 and P₂ represents the center axis of the chamfer portion 13. An eccentricity between these two center axes is not more than the radius of the guide hole 11, whereby the guide pin 12 can be smoothly guided into the guide hole 11.

By the offset of the two center axes as in the present embodiment, the chamfer portions 13 can be formed without lying off the connecting end face 6, which can satisfactorily achieve the effects of the provision of the chamfer portions 13. The effects of the provision of the chamfer portions 13 involve the effect of preventing the failure in PC connection and the damage of fiber ends due to the chipping of the ends of guide holes 11, the effect of preventing the failure in PC connection due to such deformation of the ends of the guide holes as to rise on the connecting end face 6 side, the effect of improvement in the insertion property, and so on.

When the connecting end face 6 is formed at the angle of 8° relative to the plane perpendicular to the center axes of the pair of guide holes 11, the aperture size of each chamfer portion 13 on the connecting end face 6 (D in Fig. 4) is preferably determined within the range of 1.05 to 2.0 times the inside diameter of the guide holes 11 (d in Fig. 4). The aperture size stated herein means a maximum diameter in the plane on the connecting end face 6. In the present embodiment the aperture shape of the chamfer portions 13 on the connecting end face 6 is not a regular circle, but is an ellipse or a shape close to an ellipse. Also taking these cases into consideration, the aperture size stated herein is defined as a maximum diameter.

If D/d is less than 1.05, the chamfer portions 13 are hardly formed, so as to fail to achieve the effects of the provision of the chamfer portions 13. If on the other hand D/d is larger than 2.0, the aperture size of the chamfer portions 13 becomes too large, which is not practical. In addition, the slope of the chamfer portions 13 becomes insufficient and thus, this weakens the effect of guiding the distal end of the guide pin 12 into the guide hole 11.

Further, when the connecting end face 6 is formed at the angle of 8° relative to the plane perpendicular to the center axes of the pair of guide holes 11, the foregoing deviation between the two center axes (β in Fig. 4) is preferably 50-300 µm. If this deviation β is less than 50 µm, the effect of approximately equating the distances L₁ and L₂ in Fig. 4 will be weakened. If the deviation is larger than 300 µm on the other hand, the dimensions of L₁ and L₂ in Fig. 4 will become too large. For making the deviation between the two center axes, the center axis of the chamfer portion 13 is displaced relative to the center axis of the guide hole 11 in the inclining direction of the connecting end face 6 (downward in Fig. 4; above-mentioned down side) .

When the particle size of filler (above mentioned silica) included in the ferrule 3A and 3B is big, the surface of the chamfer portion 13 would be rough without depending on the making method of the chamfer portion 13 (molding or additional process, e.g. drilling process) and it enhances the susceptibility of the surface of the chamfer portion 13 to break and deform while inserting guide pin 12. If such breakage or deformation of the chamfer portion 13 occurs, it is difficult to position the guide pin 12 in guide pin hole 11 accurately. Further, while contacting the guide pin 12 to the chamfer portion 13, the friction wastage or dust etc. appears and they not only draw the damage of the chamfer portion 13 but also adhere the end face of the optical fiber so it causes the damage of the optical fiber. More specially, when the optical connector 1A and 1B are PC connected to each other, the PC connection is apt to disconnect due to the embossment of the chamfer portion 13. Such disabilities accordingly increase the loss of optical connection when the optical connector 1A and 1B are connected each other.

In the present embodiment, the average particle size of filler included in the ferrule 3A and 3B is set to be 20 µm or less. Also, it is preferable that the maximum particle size of filler is set to be 40 µm or less. Accordingly, the over all surface of the chamfer portion 13 becomes relatively smooth. It is preferable that the surface roughness Ra of the chamfer portion 13 is within the range between 0.01 to 2.0 µm. Here, the surface roughness in this description is the arithmetic mean surface roughness defined in JIS etc. To be more specific, it is obtained by determining the roughness profile, folding back this profile along its center line, and calculating the quotient of the area between this profile and its center line divided by the length of the center line. The surface roughness can be controlled by adjusting the particle size distribution of the filler and doping amount of the filler. Accordingly, when the guide pins 12 fixed to the ferrule 3B are inserted to the corresponding guide pin holes 11 in the ferrule 3A, the breakage or embossment of chamfer portion 13 due to contact of the guide pin 12 to the chamfer portion 13 is restrained, so each guide pin 12 is accurately positioned in the corresponding guide pin holes 11. Also, the appearance of the friction wastage or dust etc. by friction between the guide pin 12 and chamfer portion 13 is restrained, the damage of the optical fiber is restrained. Accordingly, the loss of the optical connection when the optical connectors 1A and 1B are connected is decreased, such that stable coupling/uncoupling characteristics can be obtained.

Furthermore, microfying the particle size of the filler enhances the molding property when molding the ferrule 3A and 3B. And it is effective to decrease the abrasion amount of drill when the chamfer portion 13 is made by a drilling process so that the endurance of the drill is improved.

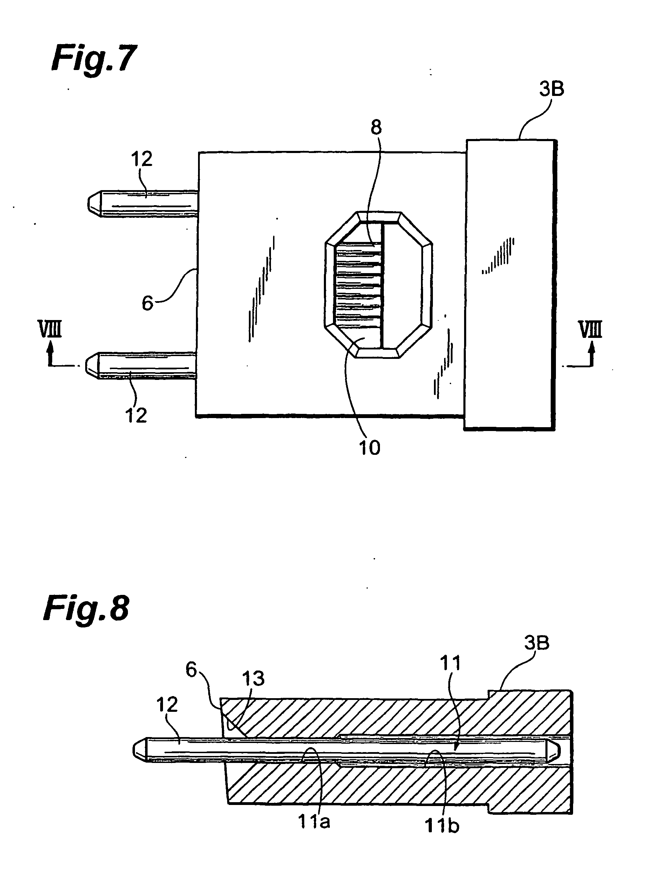

The ferrule 3B of the other optical connector 1B has the structure similar to the ferrule 3A of the above-stated connector 1A, as shown in Fig. 7 and Fig. 8. Guide pins 12 are inserted and fixed in the guide holes 11 of the ferrule 3B. The guide pins 12 are fixed to the ferrule 3B in a state in which they are inserted in the guide holes 11 so as to project by about 2 mm at the distal ends from the front end face 6. The only a difference between the ferrule 3B of the optical connector 1B and the aforementioned ferrule 3A is presence or absence of the guide pins 12, and thus the detailed description of the ferrule 3B is omitted herein.

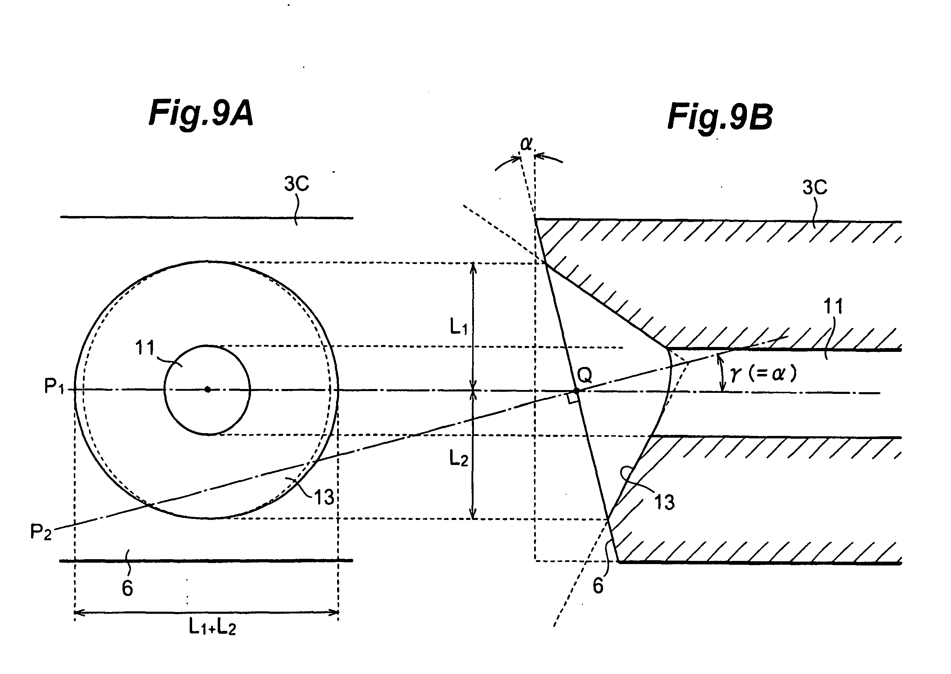

Next, the second embodiment of the ferrule for optical connector according to the present invention will be described below. Figs. 9A and 9B are equivalent views to Figs. 5. The ferrule 3C of the present embodiment is different only in the makeup form of the chamfer portions 13 from the ferrule 3A (3B) of the first embodiment described above.

In Figs. 9A and 9B, the ferrule 3C without guide pins 12 is shown. As in the aforementioned first embodiment, the ferrule 3C without guide pins 12 is also used together with the ferrule with guide pins 12, but since there is no difference except the presence or absence of the guide pins 12, the detailed description of the ferrule with guide pins 12 is omitted hereafter.

In the present embodiment, the chamfer portions 13 are formed so that the center axis P₂ of each chamfer portion 13 has an angle γ relative to the center axis P₁ of the corresponding guide hole 11. This is the case for both the pair of guide holes 11. By providing the angle γ between the center axis P₂ of the chamfer portion 13 and the center axis P₁ of the guide hole 11 in this way, the chamfer portions 13 can also be readily formed without lying off the connecting end face 6, as in the aforementioned first embodiment. Namely, the distances L₁ and L₂ in Figs. 9 can be made approximately equal to each other.

By giving the angle between the two center axes the chamfer portions 13 can be formed without lying off the connecting end face 6, which can fully achieve the effects of the provision of the chamfer portions 13. The effects of the provision of the chamfer portions 13 involve the effect of preventing the failure in PC connection and the damage of fiber ends due to the chipping of the ends of guide holes 11, the effect of preventing the failure in PC connection due to such deformation of the ends of the guide holes as to rise on the connecting end face 6 side, the effect of improvement in the insertion property, and so on.

The foregoing angle γ herein is preferably not more than the foregoing angle α and, especially preferably, is equal to the angle α. In the present embodiment, γ = α. The guide pins 12 are guided into the guide holes 11 by the chamfer portions 13, and the guiding direction on that occasion is the direction of the center axes P₂ of the chamfer portions 13. Therefore, if there is a large angle between the direction of the center axes P₂ being the guiding direction by the chamfer portions 13 and the direction of the center axes P₁ of the guide holes 11 being the final insertion direction of the guide pins 12, the guide pins become pried easily and it becomes hard for the guide pins 12 to be smoothly inserted.

Further, from the viewpoint of formation of the chamfer portions 13, the most convenient configuration in terms of manufacturing is that the center axis P₂ of the chamfer portion 13 is normal to the connecting end face 6 (that is, the aforementioned angle γ is equal to the angle α).

Especially, when the chamfer portions 13 are produced with a drill or the like, the configuration is preferable, because the cutting center position can be accurately determined in the configuration wherein the center axis P₂ of the chamfer portion 13 is normal to the connecting end face 6 being a cut surface. It is also preferable, because the drill is stable during the cutting. Even if the angle γ cannot be set equal to the angle α, they are preferably set to values as close to each other as possible. For satisfying the above in a good balance, the foregoing angle γ is preferably not more than the angle α and, especially preferably, is equal to the angle α.

An intersecting point (point Q in Fig. 9B) between the center axis P₂ of the chamfer portion 13 and the connecting end face 6 (including an extension plane of the connecting end face 6 at the grinding portion on the chamfer portion 13) is preferably located inside an extension of the guide hole 11. This configuration allows the distances L₁ and L₂ in Figs. 9 to be made approximately equal to each other. Particularly, when the foregoing point Q is located on the center axis P₁ of the guide hole 11, the distances are set as L₁ = L₂, which is particularly preferable.

Experimental data relating to optical connection loss during connection of two optical connectors are shown in Figs. 10 to 14.

Fig. 10 represents experimental data obtained by using a connector ferrule in which no chamfer was provided at the opening edge forming a portion of guide hole. The filler contained in the connector ferrule is silica with an average particle size of 20 µm or less. In the figure, the abscissa indicates the number of connection/ disconnection cycles of optical connectors, and the ordinate indicates the loss increment. Fig. 10 clearly shows that, independently of the number of connection/ disconnection cycles of optical connectors, the loss increment sometimes rapidly rises and the connection/ disconnection characteristic of optical connectors is unstable.

Fig. 11 represents experimental data obtained by using the connector ferrule like as the present invention, that is, the connector ferrule provided with a chamfer at the opening edge forming a portion of guide hole. The filler contained in the connector ferrule is silica with an average particle size of 20 µm or less. In this case, independently of the number of connection and disconnection cycles of optical connectors, the loss increment is small and the connection/disconnection characteristic of optical connectors is stabilized.

Experimental data shown in Figs . 10 and 11 demonstrate that the connection loss of optical fibers can be effectively reduced not only by decreasing the particle size of the filler contained in connector ferrules 3A, 3B, but also by providing the chamfers 13 at the opening edges of front end surfaces 6 forming a portion of guide holes 11 of connector ferrules 3A and 3B.

Fig. 12 represents experimental data on optical connection loss obtained by changing the particle size of the filler (silica) contained in the connector ferrule provided with a chamfer at the opening edge portion forming a part of guide hole. In this figure, the abscissa indicates the average value of the particle size of the filler, and the ordinate indicates the occurrence ratio of loss increment of 0.3 dB or more. Fig. 12 shows that when the average particle size of the filler is 20 µm or less, the occurrence ratio of loss increment of 0.3 dB or more is zero. Therefore, it is clear that the effective average particle size of the filler is 20 µm or less.

Fig. 13 represents experimental data on optical connection loss obtained by changing the surface roughness Ra of the chamfer in the connector ferrule provided with a chamfer at the opening edge portion forming a part of guide hole. In this figure, the abscissa indicates the surface roughness Ra of the chamfer, and the ordinate indicates the initial optical connection loss. Fig. 13 clearly shows that the initial loss is close to 0.15 dB and is comparatively stable when the surface roughness Ra of the chamfer is 2 µm or less.

Fig. 14 represents experimental data on optical connection loss obtained by changing the surface roughness Ra of the chamfer in the connector ferrule provided with a chamfer at the opening edge portion forming a part of a guide hole. In this figure, the abscissa indicates the surface roughness Ra of the chamfer, and the ordinate indicates the occurrence ratio of loss increment of 0.3 dB or more. Fig. 14 clearly shows that the occurrence ratio of loss increment of 0.3 dB or more is zero when the surface roughness Ra of the chamfer is 2 µm or less.

Experimental data presented in Fig 13 and Fig. 14 show that when the chamfer 13 is provided at the opening edge forming a part of guide hole 11 of connector ferrules 3A and 3B, it is preferred than the connector ferrules 3A and 3b be formed so that the surface roughness Ra of chamfer 13 be 2 µm or less.

The present invention is by no means intended to be limited to the above embodiments. For example, the optical connectors of the above embodiments were MPO connectors, but the present invention is not limited to the particular examples but can also be applied to other types of optical connectors such as the MT connectors and the like. The above embodiments were directed to the couplingbetween the optical connector with guide pins and the optical connector without guide pins, but the present invention is not limited to this particular example but can also be applied to a type in which optical connectors without guide pins are coupled to each other by use of two guide pins.

The above mentioned chamfer portion 13 can be made no matter what method is used. In the present embodiment, the chamfer portion 13 is made at the end portion of the guide pin holes by drilling with a drill after making guide pin holes having uniform inner diameter. If possible, the chamfer portion 13 may be made by molding with a die when the ferrule is molded. Since the center axis of the chamfer portion 13 according to the present invention is eccentric or at an angle to the center axis of the guide pin holes 11, in such case it is difficult to make a die for molding. As the result, making the chamfer portion 13 with a drill by an additional process makes high processing accuracy and eases the manufacture. And it ensures that the shape of the chamfer portion 13 becomes part of a surface of a body of revolution because the drill is rotated.

Further, it is possible to make the chamfer portion with other drilling or grinding means than for a drill. For example, as substitution for the drill 20 shown in Fig. 4, a grindstone having the same shape may be used. In this case the rotated grindstone comprised of cone-shaped metal material and diamond grain of 1 mm average particle size electrodeposited on the surface of metal material is used. The grinding process is performed after applying the 20 to 100% alcohol solution on a target place, and grinding with the above mentioned grindstone which is rotated at 100 to 500 rotations per minute. This grinding process is especially suitable for the ferrule made of the epoxy resin, and the drilling process is suitable for the ferrule made of PPS.

In above mentioned embodiment the filler included in ferrule 3Aand 3B is silica, but the filler is not restricted to silica.

The chamfer portions in the present invention are formed along the entire periphery of the guide holes and are not chipped off in part. The aforementioned angle α is provided in order to suppress the degradation of transmission loss due to the reflection at the end faces of optical fibers as described above and is about 8° in practice. The angle α is never several ten degrees.

## Claims

1. A ferrule (3A) for an optical connector (1A) provided with one or a plurality of fiber positioning hole(s) (7) into which a respective optical fiber is inserted and fixed, a pair of guide holes (11) into which guide pins (12) are inserted, said fiber positioning hole(s) (7) and said guide holes (11) extending inwardly from a connecting end face (6) thereof,
wherein said connecting end face (6) is formed so as to have an angle (α) relative to a plane normal to center axes (P₁) of said pair of guide holes (11),
**characterized in that** a chamfer portion (13) equivalent to a part of a surface of a body of revolution is formed at each guide hole (11) on the side of said connecting end face (6), and
the axis (P₂) of rotational symmetry of the chamfer portion (13) is excentric of or at an angle γ relative to the center axis (P₁) of its corresponding guide hole (11).

2. The ferrule according to claim 1, wherein when said connecting end face (6) is formed so as to have an angle (α) of 8° relative to the plane normal to the center axes (P₁) of the two guide holes (11), and said chamfer portions (13) are formed so that an aperture size (D) of each chamfer portion (13) on said connecting end face (6) is within a range of 1.05 to 2.0 times a diameter (d) of said guide holes (11).

3. The ferrule according to claim 1, wherein when said connecting end face (6) is formed so as to have an angle (α) of 8° relative to the plane normal to the center axes (P₁) of the two guide holes (11), and a deviation amount (β) between the axis (P₂) of rotational symmetry of each chamfer portion (13) and the center axis (P1) of each corresponding guide hole (11) is 50-300 µm.

4. The ferrule according to claim 1, wherein the angle (γ) of the axis (P₂) of rotational symmetry of each chamfer portion (13) relative to the center axis (P₁) of said guide holes (11) is not more than the angle (α) of said connecting end face (6) relative to the plane normal to the center axes (P₁) of said guide holes (11).

5. The ferrule for optical connector according to claim 4, wherein the angle (γ) of the axis (P₂) of rotational symmetry of each chamfer portion (13) relative to the center axis (P1) of each guide hole (11) is equal to the angle (α) of said connecting end face (6) relative to the plane normal to the center axes (P₁) of said guide holes (11).

6. The ferrule according to any one of claims 1 to 5, further including a filler whose average particle size is 20 µm or less.

7. The ferrule according to claim 6, wherein the maximum particle size of said filler is 40 µm or less.

8. The ferrule according to claim 6 or 7, wherein a surface roughness of said chamfer portion (13) is within the range between 0.01 and 2.0 µm.

9. The ferrule according to any one of claims 6 to 8, wherein said filler is silica.

10. A method of making a ferrule (3A) in accordance with claim 1 comprising the steps of:
plastic molding a ferrule body having said fiber positioning hole(s) (7) and guide holes (11);
forming the connecting end face (6) such that it is tilted to a perpendicular plane to both center axes (P₁) of said guide holes (11); and
drilling or grinding the edge of the guide holes (11) at the side of the connecting end face (6) so as to make said chamfer portion (13) equivalent to a part of a surface of a body of revolution, with the axis (P₂) of rotational symmetry excentric of or at an angle γ relative to the center axis (P₁) of the corresponding guide hole (11).

11. The method according to claim 10, wherein the axis (P₂) of rotational symmetry of said body of revolution is arranged parallel to the center axis (P₁) of said guide hole (11).

12. The method according to claim 10 or 11, wherein said body of revolution is a cone, and its tip angle (β) is within the range between 90 to 150 degrees.

13. The method according to any one of claims 10 to 12, wherein said drilling or grinding step is a drilling process with a drill having drill tip (20) made of hard metal or diamond.

14. The method according to any one of claims 10 to 13, wherein said plastic molding is performed with a resin including a filler whose average particle size is 20 µm or less.

15. The method according to claim 14, wherein the maximum particle size of said filler is 40 µm or less.

16. The method according to claim 14 or 15, wherein a surface roughness of said chamfer portion (13) is controlled between 0.01 to 2.0 µm inclusive by adjusting the particle size distribution of said filler.

17. The method according to any one of claims 14 to 16, wherein said filler is silica.

## Patentansprüche

1. Ringbeschlag (3A) für einen optischen Verbinder (1A), der mit einem oder mehreren Faserpositionierungslöchern (7) versehen ist, in welche eine jeweilige Lichtleitfaser eingeführt und dort befestigt wird, einem Paar von Führungslöchern (11), in welche Führungsstifte (12) eingeführt werden, wobei sich das Faserpositionierungsloch bzw. die Faserpositionierungslöcher (7) und die Führungslöcher (11) von einer Verbindungsendoberfläche (6) des Ringbeschlages aus nach innen erstrecken,
wobei die Verbindungsendoberfläche (6) so ausgebildet ist, dass sie einen Winkel (α) relativ zu einer Ebene normal zu Zentrumsachsen (P₁) des Paars der Führungslöcher (11) aufweist,
**dadurch gekennzeichnet, dass** ein Abschrägungsabschnitt (13) entsprechend einem Teil einer Oberfläche eines Rotationskörpers an jedem Führungsloch (11) an der Seite der Verbindungsendoberfläche (6) vorgesehen ist, und
die Achse (P₂) der Rotationssymmetrie des Abschrägungsabschnitts (13) exzentrisch oder in einem Winkel γ relativ zur Zentrumsachse (P₁) seines zugehörigen Führungslochs (11) verläuft.

2. Ringbeschlag nach Anspruch 1, bei welchem die Verbindungsendoberfläche (6) so ausgebildet ist, dass sie einen Winkel (α) von 8° relativ zur Ebene normal zu den Zentrumsachsen (P₁) der beiden Führungslöcher (11) aufweist, und die Abschrägungsabschnitte (13) so ausgebildet sind, dass eine Öffnungsgröße (D) jedes Abschrägungsabschnitts (13) auf der Verbindungsendoberfläche (6) innerhalb eines Bereiches des 1,05- bis 2,0-fachen eines Durchmessers (d) der Führungslöcher (11) liegt.

3. Ringbeschlag nach Anspruch 1, bei welchem die Verbindungsendoberfläche (6) so ausgebildet ist, dass sie einen Winkel (α) von 8° relativ zu der Ebene normal zu den Zentrumsachsen (P₁) der beiden Führungslöcher (11) aufweist, und ein Abweichungswert (β) zwischen der Achse (P₂) der Rotationssymmetrie jedes Abschrägungsabschnitts (13) und der Zentrumsachse (P₁) jedes zugehörigen Führungslochs (11) gleich 50-300 µm ist.

4. Ringbeschlag nach Anspruch 1, bei welchem der Winkel (γ) der Achse (P₂) der Rotationssymmetrie jedes Abschrägungsabschnitts (13) relativ zur Zentrumsachse (P₁) der Führungslöcher (11) nicht größer ist als der Winkel (α) der Verbindungsendoberfläche (6) relativ zur Ebene normal zu den Zentrumsachsen (P₁) der Führungslöcher (11).

5. Ringbeschlag für einen optischen Verbinder nach Anspruch 4, bei welchem der Winkel (γ) der Achse (P₂) der Rotationssymmetrie jedes Abschrägungsabschnitts (13) relativ zur Zentrumsachse (P₁) jedes Führungslochs (11) gleich dem Winkel (α) der Verbindungsendoberfläche (6) relativ zu der Ebene normal zu den Zentrumsachsen (P₁) der Führungslöcher (11) ist.

6. Ringbeschlag nach einem der Ansprüche 1 bis 5, welcher weiterhin einen Füllstoff aufweist, dessen mittlere Teilchengröße 20 µm oder kleiner ist.

7. Ringbeschlag nach Anspruch 6, bei welchem die maximale Teilchengröße des Füllstoffs 40 µm oder kleiner ist.

8. Ringbeschlag nach Anspruch 6 oder 7, bei welchem eine Oberflächenrauhigkeit des Abschrägungsabschnitts (13) innerhalb des Bereichs zwischen 0,01 und 2,0 µm liegt.

9. Ringbeschlag nach einem der Ansprüche 6 bis 8, bei welchem der Füllstoff Siliziumdioxid ist.

10. Verfahren zur Herstellung eines Ringbeschlages (3A) gemäß Patentanspruch 1-mit folgenden Schritten:
Kunststoffformen eines Ringbeschlagkörpers, welcher das Faserpositionierungsloch bzw. die Faserpositionierungslöcher (7) und Führungslöcher (11) aufweist;
Formen der Verbindungsendoberfläche (6) so, dass sie schräg zu einer Ebene senkrecht zu beiden Zentrumsachsen (P₁) der Führungslöcher (11) steht; und
Bohren oder Schleifen des Randes der Führungslöcher (11) an der Seite der Verbindungsendoberfläche (6) so, dass der Abschrägungsabschnitt (13) einem Teil einer Oberfläche eines Rotationskörpers entspricht, wobei die Achse (P₂) der Rotationssymmetrie exzentrisch oder in einem Winkel γ zur Zentrumsachse (P₁) des entsprechenden Führungslochs (11) steht.

11. Verfahren nach Anspruch 10, bei welchem die Achse (P₂) der Rotationssymmetrie des Rotationskörpers parallel zur Zentrumsachse (P₁) des Führungslochs (11) angeordnet ist.

12. Verfahren nach Anspruch 10 oder 11, bei welchem der Rotationskörper ein Kegel ist, und dessen Spitzenwinkel (β) innerhalb des Bereiches von 90 bis 150 Grad liegt.

13. Verfahren nach einem der Ansprüche 10 bis 12, bei welchem der Bohr- oder Schleifschritt ein Bohrvorgang mit einem Bohrer ist, der eine Bohrerspitze (20) aufweist, die aus Hartmetall oder Diamant besteht.

14. Verfahren nach einem der Ansprüche 10 bis 13, bei welchem das Kunststoffformen mit einem Harz durchgeführt wird, das einen Füllstoff aufweist, dessen mittlere Teilchengröße 20 µm oder kleiner ist.

15. Verfahren nach Anspruch 14, bei welchem die maximale Teilchengröße des Füllstoffs 40 µm oder kleiner ist.

16. Verfahren nach Anspruch 14 oder 15, bei welchem eine Oberflächenrauhigkeit des Abschrägungsabschnitts (13) auf zwischen 1,01 bis 2,0 µm durch Einstellen der Teilchengrößenverteilung des Füllstoffs gesteuert wird.

17. Verfahren nach einem der Ansprüche 14 bis 16, bei welchem der Füllstoff Siliziumdioxid ist.

## Revendications

1. Ferrule (3A) pour un connecteur optique (1A) dotée d'un ou de plusieurs trous de positionnement de fibre (7) dans lesquels une fibre optique respective est insérée et fixée, d'une paire de trous de guidage (11) dans lesquels des chevilles de guidage (12) sont insérées, lesdits trous de positionnement de fibre (7) et lesdits trous de guidage (11) s'étendant vers l'intérieur depuis une face d'extrémité de connexion (6) de ceux-ci,
dans laquelle ladite face d'extrémité de connexion (6) est formée de manière à avoir un angle (α) par rapport à un plan perpendiculaire à des axes centraux (P₁) de ladite paire de trous de guidage (11),
**caractérisée en ce qu'**une partie de chanfrein (13) équivalant à une partie-d'une surface d'un corps de révolution est formée au niveau de chaque trou de guidage (11) sur le côté de ladite face d'extrémité de connexion (6), et
l'axe (P₂) de symétrie de rotation de la partie de chanfrein (13) est excentré de ou à un angle γ par rapport à l'axe central (P₁) de son trou de guidage correspondant (11).

2. Ferrule selon la revendication 1, dans laquelle ladite face d'extrémité de connexion (6) est formée de manière à avoir un angle (α) de 8° par rapport au plan perpendiculaire aux axes centraux (P₁) des deux trous de guidage (11), et lesdites parties de chanfrein (13) sont formées de sorte qu'une taille d'ouverture (D) de chaque partie de chanfrein (13) sur ladite face d'extrémité de connexion (6) se trouve dans une plage de 1,05 à 2,0 fois un diamètre (d) desdits trous de guidage (11).

3. Ferrule selon la revendication 1, dans laquelle la face d'extrémité de connexion (6) est formée de manière à avoir un angle (α) de 8° par rapport au plan perpendiculaire aux axes centraux (P₁) des deux trous de guidage (11), et une quantité de déviation (β) entre l'axe (P₂) de symétrie de rotation de chaque partie de chanfrein (13) et l'axe- central (P₁) de chaque trou de guidage correspondant (11) est comprise entre 50 et 300 µm.

4. Ferrule selon la revendication 1, dans laquelle l'angle (γ) de l'axe (P₂) de symétrie de rotation de chaque partie de chanfrein (13) par rapport à l'axe central (P₁) desdits trous de guidage (11) n'est pas supérieur à l'angle (α) de ladite face d'extrémité de connexion (6) par rapport au plan perpendiculaire aux axes centraux (P₁) desdits trous de guidage (11).

5. Ferrule pour connecteur optique selon la revendication 4, dans laquelle l'angle (γ) de l'axe (P₂) de symétrie de rotation de chaque partie de chanfrein (13) par rapport à l'axe central (P₁) de chaque trou de guidage (11) est égal à l'angle (α) de ladite face d'extrémité de connexion (6) par rapport au plan perpendiculaire aux axes centraux (P1) desdits trous de guidage (11).

6. Ferrule selon l'une quelconque des revendications 1 à 5, comprenant en outre un agent de remplissage dont la taille de particule moyenne est de 20 µm ou moins.

7. Ferrule selon la revendication 6, dans laquelle la taille de particule maximale dudit agent de remplissage est de 40 µm ou moins.

8. Ferrule selon la revendication 6 ou 7, dans laquelle une rugosité de surface de ladite partie de chanfrein (13) se trouve dans la plage entre 0,01 et 2,0 µm.

9. Ferrule selon l'une quelconque des revendications 6 à 8, dans laquelle ledit agent de remplissage est de la silice.

10. Procédé de fabrication d'une ferrule (3A) conformément à la revendication 1 comprenant les étapes consistant à :
mouler au plastique un corps de ferrule ayant le(s)dit(s) trou(s) de positionnement de fibre (7) et lesdits trous de guidage (11) ;
former la face d'extrémité de connexion (6) de sorte qu'elle soit inclinée selon un plan perpendiculaire aux deux axes centraux (P₁) desdits trous de guidage (11) ; et
percer ou affûter le bord des trous de guidage (11) au niveau du côté de la face d'extrémité de connexion (6) de manière à rendre ladite partie de chanfrein (13) équivalente à une partie d'une surface d'un corps de révolution, l'axe (P₂) de symétrie de rotation étant excentré de ou à un angle γ par rapport à l'axe central (P₁) du trou de guidage correspondant (11).

11. Procédé selon la revendication 10, dans lequel l'axe (P₂) de symétrie de rotation dudit corps de révolution est agencé parallèlement à l'axe central (P₁) dudit trou de guidage (11).

12. Procédé selon la revendication 10 ou 11, dans lequel ledit corps de révolution est un cône, et son angle d'inclinaison (β) se trouve dans la plage entre 90 et 150 degrés.

13. Procédé selon l'une quelconque des revendications 10 à 12, dans lequel ladite étape de perçage ou d'affûtage est un processus de perçage avec une perceuse ayant un foret (20) composé de métal dur ou de diamant.

14. Procédé selon l'une quelconque des revendications 10 à 13, dans lequel ledit moulage plastique est effectué avec une résine comprenant un agent de remplissage dont la taille de particule moyenne est de 20 µm ou moins.

15. Procédé selon la revendication 14, dans lequel la taille de particule maximale dudit agent de remplissage est de 40 µm ou moins.

16. Procédé selon la revendication 14 ou 15, dans lequel une rugosité de surface de ladite partie de chanfrein (13) est commandée entre 0,01 et 2,0 µm compris en ajustant la répartition de taille de particule dudit agent de remplissage.

17. Procédé selon l'une quelconque des revendications 14 à 16, dans lequel ledit agent de remplissage est de la silice.
